# EUROPÄISCHE PATENTSCHRIFT

(11) **EP 3 052 839 B1**
(45) Veröffentlichungstag und Bekanntmachung des Hinweises auf die Patenterteilung: **02.01.2019**
(21) Anmeldenummer: 14739369.8
(22) Anmeldetag: 03.07.2014
(51) Int. Cl.: F16J 15/34, C21D 1/09, C21D 1/40, C21D 9/40

(54) **GLEITRINGE MIT LEDEBURITISCHEM GEFÜGE AN DER OBERFLÄCHE**
SLIDE RINGS HAVING A LEDEBURITIC MICROSTRUCTURE AT THE SURFACE
BAGUE COULISSANTE À STRUCTURE LÉDEBURITIQUE EN SURFACE

(30) Priorität: 30.09.2013 DE 102013219784
(43) Veröffentlichungstag der Anmeldung: 10.08.2016
(73) Patentinhaber: Federal-Mogul Friedberg GmbH, 86316 Friedberg (DE)
(72) Erfinder: BRADL, Christoph, 86316 Friedberg (DE); MATZ, Marc-Manuel, 86438 Kissing (DE); DENGLER, Andreas, 86316 Friedberg (DE); KUMPFMÜLLER, Andreas, 86316 Friedberg (DE)
(74) Vertreter: Becker Kurig Straus
(86) Internationale Anmeldenummer: PCT/EP2014/064135
(87) Internationale Veröffentlichungsnummer: WO 2015/043782

(56) Entgegenhaltungen:
- DE-A1- 3 433 698
- DE-A1-102005 054 709
- DE-C1- 3 418 555
- GB-A- 2 057 510

## Beschreibung

Die Erfindung betrifft Verfahren zur Herstellung von Gleitringen mit einer Funktionsfläche aus ledeburitischem Gefüge.

### Stand der Technik

Metallische Gleitdichtringe werden aufgrund der benötigten Verschleißfestigkeit oft aus möglichst hartem, verschleißbeständigem Material gefertigt. Dazu gehört beispielsweise ledeburitischer Hartguss oder hoch chromhaltiger Stahlguss. Diese Werkstoffe weisen üblicherweise eine hohe Härte (zwischen 50-64 HRC) sowie eine sehr gute Verschleißbeständigkeit gegen Abrasion auf. Jedoch ist dabei ein Nachteil, dass sowohl das Gießen des Materials als auch die folgenden mechanische Bearbeitung nur mit großem Aufwand und hohen Kosten möglich ist. Außerdem sind diese Werkstoffe sehr spröde, was bei Stoßbelastung zum Bruch führen kann. Zusätzlich ist die Wärmeleitfähigkeit normalerweise gering.

DE 10 2005 054 709 A1 offenbart ein Verfahren zur Herstellung eines Gleitrings, indem Gleitringe aus einem Graugussmaterial erzeugt, mechanisch bearbeitet und abschließend einer Laserhärtung der Funktionsfläche unterzogen werden.

Bei der Herstellung von Gusseisen unterscheidet man zwischen grau- und weißerstarrtem Guss. Erstarrt das flüssige Gusseisen im thermodynamischen Gleichgewicht, spricht man von einer stabilen Erstarrung. Das Gefüge besteht dann hauptsächlich aus Eisen und freiem Graphit und wird als Grauguss bezeichnet. Erstarrt das System jedoch im metastabilen Gleichgewicht, entsteht ein sogenanntes ledeburitisches Gefüge aus Eisen und Eisencarbid (Weißguss).

Es wird also ein Verfahren zur Herstellung von Gleitringen mit möglichst verschleißfester Oberfläche gesucht, das dennoch kostengünstig ist und die Produktion vereinfacht.

### Zusammenfassung der Erfindung

Gemäß der Erfindung wird ein Gleitring aus Grauguss so bearbeitet, dass das Gefüge an den Funktionsflächen sich vom restlichen Gefüge unterscheiden. Dazu wird die Oberfläche des Rings mit energiereicher Strahlung behandelt, so dass zumindest ein Teilbereich der Oberfläche umgeschmolzen wird und beim Abkühlen des Bauteils ein ledeburitisches Gefüge an der Oberfläche entsteht, bei dem im wesentlichen der gesamte Kohlenstoff zu Eisenkarbid umgewandelt wurde. Das ledeburitische Gefüge zeigt eine wesentlich größere Härte und Verschleißfestigkeit als der ursprüngliche Grauguss. An das ledeburitische Gefüge schließt sich in Richtung Grundmaterial vorzugsweise eine Übergangszone mit martensitischem Gefüge (Härtegefüge) und freiem Graphit an. Erfindungsgemäß ist die Strahlung ein Laserstrahl oder ein Elektronenstrahl.

In beispielhaften Ausführungsformen kann an der Funktionsfläche ein Muster aus Teilbereichen mit ledeburitischem Gefüge und anderen Teilbereichen mit Härtegefüge erzeugt werden. So wechseln sich auch Bereiche mit freiem Graphit mit solchen ohne freies Graphit ab, wobei der Graphit die Schmiereigenschaften verbessern kann. Das Härtegefüge kann ein martensitisches und/oder bainitisches Gefüge umfassen.

Erfindungsgemäß liegt das ledeburitische Gefüge an der Funktionsfläche bis zu einer Tiefe von bis zu 1,5 mm vor. Die Funktionsfläche ist die Gleitfläche eines Gleitrings. In beispielhaften Ausführungsformen kann die Oberfläche der Funktionsfläche außerdem mit einer Struktur aus Vertiefungen und/oder Poren versehen sein.

Erfindungsgemäß wird ein Verfahren zur Herstellung eines Gleitrings vorgestellt, umfassend das Herstellen eines Gleitrings aus einem Grauguss; Erwärmen einer Funktionsfläche durch Bestrahlen mit hochenergetischer Strahlung; wobei das Bestrahlen so ausgeführt wird, dass zumindest ein Teilbereich der bestrahlten Fläche umgeschmolzen wird; wobei die Parameter der Bestrahlung so gewählt sind, dass zumindest ein Teilbereich der Funktionsfläche nach dem Abkühlen ein ledeburitisches Gefüge aufweist.

Vorzugsweise kann das Umschmelzen so ausgeführt werden, dass zwischen dem ledeburitischen Gefüge und dem Grauguss eine Übergangszone mit martensitischem Gefüge entsteht. Das Abkühlen der umgeschmolzenen Zone kann beispielsweise nur durch Selbstabschreckung erreicht werden.

Erfindungsgemäß kann das Bestrahlen eines der folgenden Verfahren umfassen: Bestrahlen mit einem Laserstrahl oder Elektronenstrahl.

Je nach Ausführungsform kann bei der Herstellung des Gleitrings aus Grauguss mindestens ein Karbidbildner dem Gußmaterial hinzugefügt werden, ausgewählt aus V, Cr, W, und Si.

Optional kann die Bestrahlung so ausgeführt werden, dass lokal die umgeschmolzenen Teilbereiche und nicht umgeschmolzene Teilbereiche der Oberfläche ein vordefiniertes Muster aus unterschiedlichen Gefügen bilden.

### Kurze Beschreibung der Zeichnungen

Im Folgenden wird die Erfindung anhand von beispielhaften Ausführungsformen und Zeichnungen näher beschrieben, wobei
Figur 1 einen Querschnitt durch einen erfindungsgemäßen Ring mit verschiedenen Gefügezonen zeigt; und
Figur 2 verschiedene Muster als Übersicht zeigt, die in den umgeschmolzenen Bereichen eines Gleitrings erfindungsgemäß vorliegen können.

### Ausführliche Beschreibung von Ausführungsformen

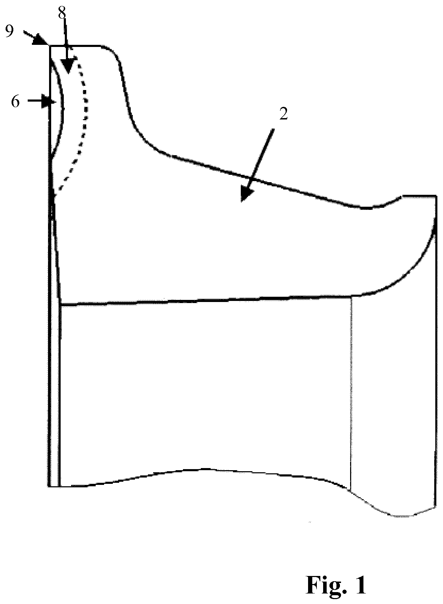

In Figur 1 ist ein beispielhafter Gleitring im Querschnitt gezeigt, der eine Funktionsfläche gemäß der Erfindung aufweist. In diesem Fall ist die Funktionsfläche die Gleitfläche 4 des Rings, die im Betrieb an der Gegenfläche anliegt und gleitet. In weiteren Beispielen können auch zusätzliche oder alternative Funktionsflächen gemäß der Erfindung vorliegen, etwa die Kontaktfläche zwischen Elastomeren und dem Gleitring. Der Grundwerkstoff 2 des Rings kann beispielsweise ein Grauguss sein, etwa ein Gusseisen mit Lamellengraphit (EN-GJL), Vermiculargraphit (EN-GJV) oder Kugelgraphit (EN-GJS).

An der Funktionsfläche 4 ist im Schnitt der Umschmelzungsbereich 6 zu sehen, der beispielsweise bis zu einer Tiefe von etwa 1,5 mm senkrecht zur Oberfläche reichen kann. In diesem Bereich wurde der Grundwerkstoff 2 durch energiereiche Strahlung wie etwa einen Laserstrahl umgeschmolzen. Das Umschmelzen dieser Zone 6 im oberflächennahen Bereich und anschließende Selbstabschreckung durch den raschen Temperaturausgleich zwischen erhitztem Randbereich und angrenzendem Werkstoffvolumen führt zur Bildung eines ledeburitischen Gefüges in diesem Bereich 6; dort liegt also anschließend ein metastabiles Gefüge aus Eisen und Eisenkarbid vor, das im wesentlichen frei von freiem Kohlenstoff bzw. Graphit ist.

Anstelle eines Laserstrahls könnte die Oberfläche auch mit anderer energiereicher Strahlung bzw. Wärmeeinwirkung behandelt werden. Auf ähnliche Weise könnte ein Elektronenstrahl verwendet werden. Andere denkbare nicht beanspruchte Verfahren zum Erzeugen eines ledeburitischen Gefüges an der Oberfläche sind Lichtbogenschweißverfahren wie Wolfram-Inertgas-Schweißen (WIG) und Plasmaschweißen. Dem Fachmann ist verständlich, dass ebenso gleichwertige Verfahren angewendet werden können, die ein lokal definiertes Umschmelzen an der Oberfläche in kurzer Zeit ermöglichen.

Falls in einer beispielhaften Ausführungsform ein Laserstrahl als Energiequelle verwendet wird, könnte beispielsweise eine Strahlbreite zwischen 3 und 8 mm eingesetzt werden. Bei einer Leistung von 1 bis 4,5kW mit ungepulstem Laserstrahl kann dann beispielsweise mit einer Vorschubgeschwindigkeit von 0,5 bis 2 Meter pro Minute die Oberfläche bearbeitet werden, so dass die entsprechenden Bereiche aufgeschmolzen und durch Selbstabschreckung wieder abgekühlt werden, wie oben beschrieben wurde. Ebenso sind aber natürlich andere Parameter, andere Leistungen, gepulste Laserstrahlung und/oder andere Methoden denkbar, die zu der beschriebenen Umschmelzung an der Oberfläche führen und ein ledeburitisches Gefüge erzeugen.

An den Umschmelzungsbereich 6 schließt in Richtung Bauteilmitte im Querschnitt ein Übergangsbereich 8 an, der ebenfalls abgegrenzt zum restlichen Werkstoff 2 - durch gestrichelte Linie - dargestellt ist. Der Übergangsbereich 8 ist nicht umgeschmolzen, sondern zeigt nur ein durch Wärmeeinfluss verändertes Härtegefüge, beispielsweise ein im Wesentlichen martensitisches Gefüge mit Graphit. An den Härtebereich bzw. Übergangsbereich 8 schließt dann das Grundgefüge 2, also der ursprüngliche Grauguss, an. Je nach Umschmelzvorgang und Grundmaterial können auch mehr als diese drei in Figur 1 gezeigten Zonen 6, 8, 2 entstehen, beispielsweise unterschiedliche Zonen mit Martensit und Bainit.

Insbesondere die Bearbeitung mit einem Laserstrahl oder andere stark fokussierte Einstrahlung ermöglichen es, nur klar definierte Bereiche der Oberfläche umzuschmelzen. So kann die gesamte Funktionsfläche 4 oberflächlich zu einem ledeburitischen Gefüge 6 umgeschmolzen werden, beispielsweise die gesamte Gleitfläche eines Gleitrings. Ebenso können aber auch nur Teile dieser Flächen umgeschmolzen werden, zum Beispiel in der Form von regelmäßigen Mustern oder größeren Abschnitten. Die nicht umgeschmolzenen Bereiche können entweder unbehandelt bleiben oder nur gehärtet werden, ohne umzuschmelzen. Auf diese Weise können beispielsweise Bereiche erzeugt werden, in denen teilweise ein rein ledeburitisches Gefüge ohne freien Kohlenstoff vorliegt und daneben Bereiche, die nur ein Härtegefüge aufweisen, jedoch noch freien Kohlenstoff in der Form von Graphit aufweisen. Die Bereiche mit Graphit können eine verbesserte Wärmeleitfähigkeit hervorbringen; außerdem können dadurch die Laufeigenschaften verbessert werden. Die Oberflächengüte der umgeschmolzenen Zone kann beispielsweise bei einer Rauhtiefe R_{z} von weniger als 20 µm liegen.

In alternativen Ausführungsformen kann auch in dem ledeburitischen Gefügebereich ein Restanteil von freiem Graphit vorhanden sein.

In den Grauguss können zusätzlich Karbidbildner bereits im Grundmaterial zugegeben werden. Solche Karbidbildner sind beispielsweise Cr, V, Si, Mo oder W. Dann können bei dem Umschmelzvorgang weitere Karbide zusätzlich zum Eisenkarbid entstehen, wie etwa Cr₂C₃, SiC, VC oder WC, die die Härteeigenschaften der Oberfläche weiter positiv beeinflussen. Beispielsweise könnten Mo bis 17 Gew%, bevorzugt 0,5 bis 5 Gew%, Si bis 4,5 Gew%, W bis 5 Gew-% , bevorzugt 0,3-1,5 Gew-%, V bis 2 Gew% und/oder bis zu 30 Gew-% Crim Grundwerkstoff enthalten sein. Es können ein oder mehrere verschiedene Karbidbildner in beliebiger geeigneter Kombination im Werkstoff enthalten sein. Ebenso könnten selbstschmierende Stoffe in dem Grundwerkstoff ergänzt werden, wie etwa Graphit, hexagonales Bornitrid, Mo₂S oder andere geeignete Stoffe; auch hier können einzelne Stoffe oder eine Kombination davon eingebracht werden.

Erfindungsgemäß werden zusätzlich zu im Grundmaterial enthaltenen Karbidbildnern geeignete Karbide und/oder selbstschmierenden Stoffe, durch Dispergieren direkt beim Umschmelzvorgang zusätzlich in die Schmelze eingebracht.

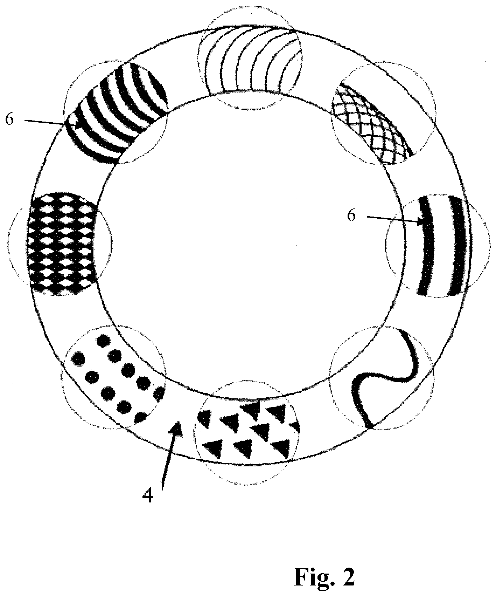

Figur 2 zeigt verschiedene Muster, die beispielsweise mittels eines Laserstrahls auf einer Oberfläche im Bereich einer Funktionsfläche 4 (Gleitfläche) erzeugt werden können. So könnte ein Muster aus Punkten, Dreiecken oder Rauten vorliegen. Ebenso könnten breitere oder sehr dünne Linienmuster erzeugt werden, wobei die Linien in Umfangsrichtung oder quer und/oder schräg dazu ausgerichtet sein können. Es könnten Wellenlinien oder gekreuzte Linien angebracht werden. Dabei könnten die schwarzen Bereiche der Musterbeispiele in Figur 2 in einer beispielhaften Ausführungsform die umgeschmolzenen Bereiche mit ledeburitischem Gefüge 6 darstellen, während die übrigen weißen Bereiche die nicht umgeschmolzenen, nur gehärteten Bereiche mit Graphit zeigen. Ebenso könnte aber auch die Gefügeverteilung umgekehrt sein und die weißen Bereiche könnten per Laser zu einem ledeburitischen Gefüge umgeschmolzen werden. Durch den fokussierten Laserstrahl oder ähnliche Verfahren ist eine sehr exakt lokalisierte Einstrahlung und Erwärmung möglich. Selbstverständlich könnten verschiedene Muster auch beliebig miteinander kombiniert werden, etwa abhängig von der konkret erwarteten Belastung der jeweiligen Funktionsfläche. Außerdem kann auf diese Weise das Muster auch unterschiedlich hohe Bereiche aufweisen, so dass beispielsweise das Härtegefüge minimal weiter oder weniger hervorragt als das ledeburitische Gefüge. Die tribologischen Eigenschaften der Oberfläche sind abhängig von den vorliegenden Mustern und können so gezielt angepasst werden.

Das gezielte Umschmelzen im Bereich der Funktionsflächen ermöglicht es darüber hinaus, die Kante zwischen Lauffläche oder Gleitfläche und Steg scharfkantig zu belassen, so dass nach dem Härten bzw. Umschmelzen keine weitere Bearbeitung dieser Kante mehr erforderlich ist. Dies gilt auch für andere Ringe oder Ringabschnitte; notwendige Bearbeitungsschritte können vor dem Umschmelzen am weicheren Grauguss vorgenommen werden, da die bereits bearbeiteten Bereiche gezielt von der Umschmelzung ausgenommen werden können, falls das gewünscht ist.

Durch eine definierte Bearbeitung der Oberfläche, wieder beispielsweise durch einen Laserstrahl, können auch Risse, Rinnen oder Poren in den Bereich der Funktionsfläche gezielt eingebracht werden. Solche Strukturen können dann im Betrieb als Ölrückhaltevolumen dienen und die Schmiereigenschaften zusätzlich verbessern. Die Porenstrukturen können Mikrodruckkammern bilden. Ebenso könnten in solchen Oberflächenstrukturen andere Schmierstoffe eingebracht werden.

## Patentansprüche

1. Verfahren zur Herstellung eines Gleitrings, umfassend
Herstellen eines Gleitrings aus Grauguss (2)
Erwärmen einer Funktionsfläche (4) des Gleitrings durch Bestrahlen mit hochenergetischer Strahlung, nämlich Laserstrahl oder Elektronenstrahl,
wobei das Bestrahlen so ausgeführt wird, dass zumindest ein Teilbereich der bestrahlten Fläche umgeschmolzen wird,
wobei die Parameter der Bestrahlung so gewählt sind, dass zumindest ein Teilbereich (6) der Funktionsfläche nach dem Abkühlen ein ledeburitisches Gefüge aufweist, **dadurch gekennzeichnet, dass** das Gefüge an der Funktionsfläche bis zu einer Tiefe von 1,5 mm vorliegt, und, dass
Partikel aus mindestens einem Karbid und/oder einem selbstschmierenden Stoff durch Dispergieren direkt beim Umschmelzen zusätzlich in die Schmelze eingebracht werden.

2. Verfahren nach Anspruch 1, wobei das Umschmelzen so ausgeführt wird, dass zwischen dem ledeburitischen Gefüge (6) und dem Grauguss (2) eine Übergangszone mit martensitischem Gefüge (8) entsteht.

3. Verfahren nach Anspruch 1 oder 2, wobei das Abkühlen nur durch Selbstabschreckung erreicht wird.

4. Verfahren nach einem der Ansprüche 1 bis 3, wobei bei der Herstellung des Gleitrings aus Grauguss mindestens ein Karbidbildner dem Gußmaterial hinzugefügt wird, ausgewählt aus V, Cr, W, Mo und Si.

5. Verfahren nach einem der Ansprüche 1 bis 4, wobei die Bestrahlung so geführt wird, dass die umgeschmolzenen Teilbereiche und nicht umgeschmolzene Teilbereiche der Oberfläche ein vordefiniertes Muster bilden.

## Claims

1. A method for the production of a slide ring, comprising
producing a slide ring from grey cast iron (2)
heating a functional surface (4) of the slide ring by irradiating with high-energy radiation, namely a laser beam or electron beam,
wherein the irradiating is carried out such that at least a partial region of the irradiated surface is remelted,
wherein the parameters of the irradiation are selected such that at least a partial region (6) of the functional surface has a ledeburitic microstructure after cooling, **characterised in that** the microstructure is present on the functional surface up to a depth of 1.5 mm, and **in that**
particles consisting of at least one carbide and/or a self-lubricating substance are additionally incorporated by dispersion directly into the melt during remelting.

2. The method according to claim 1, wherein the remelting is carried out such that a transition zone with a martensitic microstructure (8) is produced between the ledeburitic microstructure (6) and the grey cast iron (2) .

3. The method according to claim 1 or 2, wherein the cooling is achieved only by self-quenching.

4. The method according to one of claims 1 to 3, wherein during the production of the slide ring from grey cast iron at least one carbide-forming element is added to the cast material, selected from V, Cr, W, Mo and Si.

5. The method according to one of claims 1 to 4, wherein the irradiation is carried out such that the remelted partial regions and the non-remelted partial regions of the surface form a predefined pattern.

## Revendications

1. Procédé, destiné à fabriquer une bague coulissante, comprenant
la fabrication d'une bague coulissante en fonte grise (2)
le chauffage d'une surface fonctionnelle (4) de la bague coulissante par irradiation avec un rayonnement hautement énergétique, à savoir un faisceau laser ou un faisceau d'électrons,
l'irradiation étant réalisée de telle sorte qu'au moins une zone partielle de la surface irradiée subisse une refusion,
les paramètres de l'irradiation étant sélectionnés de manière à ce qu'après le refroidissement, au moins une zone partielle (6) de la surface fonctionnelle présente une structure lédeburitique, **caractérisé en ce que** la structure sur la surface fonctionnelle se présente jusqu'à une épaisseur de 1,5 mm et **en ce que**
des particules en au moins un carbure et/ou une substance autolubrifiante sont incorporées en supplément dans la masse fondue, par dispersion directement lors de la refusion.

2. Procédé selon la revendication 1, la refusion étant réalisée de telle sorte qu'entre la structure lédeburitique (6) et la fonte grise (2) se produise une zone de transition à structure martensitique (8).

3. Procédé selon la revendication 1 ou 2, le refroidissement n'étant obtenu que par auto-trempage.

4. Procédé selon l'une quelconque des revendications l à 3, lors de la fabrication de la bague coulissante en fonte grise, au moins un générateur de carbure, choisi parmi le V, le Cr, le W, le Mo et le Si étant ajouté à la matière de fonte.

5. Procédé selon l'une quelconque des revendications 1 à 4, l'irradiation étant menée de telle sorte que les zones partielles refondues et les zones partielles non refondues de la surface forment un motif prédéfini.
